# EUROPÄISCHE PATENTANMELDUNG

(11) **EP 4 782 487 A2**
(43) Veröffentlichungstag der Anmeldung: **29.07.2026**
(21) Anmeldenummer: 26176935.0
(22) Anmeldetag: 25.04.2024
(51) Int. Cl.: C08J 5/18

(54) **MEHRSCHICHTIGE, BIAXIAL ORIENTIERTE POLYESTERFOLIE ZUR HAFTUNG AUF MELAMINHARZSUBSTRATEN**

(30) Priorität: 03.05.2023 DE 102023111474
(62) Teilanmeldung aus: 24172378.2
(71) Anmelder: Mitsubishi Polyester Film GmbH, 65203 Wiesbaden (DE)
(72) Erfinder: Ünal E., Alper, 55437 Ober-Hilbersheim (DE); Herbst, Thiemo, 55116 Mainz (DE); Hummel, Miriam, 65385 Rüdesheim (DE)
(74) Vertreter: Dr. Müller Patentanwälte

(57) **Zusammenfassung**

Die vorliegende Erfindung betrifft eine mehrschichtige, biaxial orientierte Polyesterfolie umfassend eine Deckschicht A und eine Basisschicht B zur Haftung auf Melaminharzsubstraten, ein Verfahren zur Herstellung der erfindungsgemäßen Polyesterfolie, ein Laminat umfassend sie erfindungsgemäße Polyesterfolie, die Verwendung der erfindungsgemäßen Polyesterfolie in einem Laminat, sowie die Verwendung des erfindungsgemäßen Laminats als Oberflächenmaterial für Möbelstücken.

## Beschreibung

Die vorliegende Erfindung betrifft eine mehrschichtige, biaxial orientierte Polyesterfolie umfassend eine Deckschicht A und eine Basisschicht B zur Haftung auf Melaminharzsubstraten, ein Verfahren zur Herstellung der erfindungsgemäßen Polyesterfolie, ein Laminat umfassend die erfindungsgemäße Polyesterfolie, die Verwendung der erfindungsgemäßen Polyesterfolie in einem Laminat, sowie die Verwendung des erfindungsgemäßen Laminats als Oberflächehmaterial für Möbelstücke.

### Einleitung

Dekorative Laminate sind bekannt als Oberflächenmaterial zur Herstellung von Möbelstücken, wie beispielsweise Schränken, Kommoden, Küchenmöbeln oder auch Laminatfußböden. Als eine Schicht solcher Laminate hat sich die Verwendung von biaxial orientierten Polyesterfolien (boPET-Folien) als vorteilhaft erwiesen, insbesondere, wenn sie noch mit einem harten Lacküberzug versehen sind. Diese Folien werden mit einem dekorativen Melaminpapier, das seinerseits mit einer zellulosehaltigen Platte wie Holz (als Faserplatte o.Ä.) verbunden ist, dauerhaft verbunden. Solcherart ausgestattete Laminate weisen eine hohe Abriebfestigkeit und Chemikalienbeständigkeit auf. Notwendige Voraussetzung für ein solches Laminat ist eine besonders ausgestattete Polyesterfolie, die dauerhaft mit einem Lack und auch mit dem Melaminpapier verbunden werden kann.

Um eine bessere Haftung einer Polyesterfolie zu Klebstoffen und Heißsiegelklebstoffen oder für die Laminierung mit verschiedenen Materialien zu gewährleisten, gibt es im Stand der Technik eine Reihe von Methoden.

Bekannte Methoden sind beispielsweise die Corona-, Plasma- oder Flammbehandlung. Hierdurch wird die Oberfläche chemisch verändert, was sich in einem deutlichen Anstieg der Oberflächenspannung und einer besseren Haftung vieler Materialien auf die Oberfläche bemerkbar macht. Ein Vorteil dieser Methoden ist, dass sie "inline", d.h. während des Folienprozesses durchgeführt werden, was wirtschaftlich vorteilhaft ist. Nachteilig ist, dass diese Veränderungen mit der Zeit abnehmen und nach einiger Zeit keinen Effekt mehr haben. Auch ist der haftvermittelnde Effekt häufig nicht stark genug, um eine dauerhafte Verbindung zu gewährleisten.

Eine weitere Möglichkeit ist das Ätzen der Oberfläche der Polyesterfolie. Die Folienoberfläche kann mit starken Säuren angeätzt werden, wobei die Esterbindungen des Polyesters aufgebrochen werden. Dies kann z.B. mit Schwefelsäure, evtl. unter Zugabe starker Oxidationsmittel erfolgen. Auch die Verwendung von Trichloressigsäure ist möglich, eventuell unter Zugabe von Siliziumdioxid-Partikeln und / oder Polymerdispersionen, Vorteile dieser Herangehensweise sind die Beständigkeit und Güte dieser Behandlung, die einen dauerhaften Verbund mit einer Vielzahl von Substraten ermöglicht. Nachteilig ist hier jedoch, dass der Prozessschritt "offline", also nach Herstellung der Folie erfolgen muss, sowie dass die Verwendung toxischer und ätzender Substanzen, deren Handhabung, Entsorgung sowie die restlose Entfernung von der Folie einen großen Aufwand darstellen und entsprechend teuer sind (WO 2005/111606 A2).

Eine weitere Möglichkeit stellt das Inline-Coating dar. Die Folie kann "inline", also während des Herstellungsprozesses mit einer wässrigen Dispersion beschichtet werden, um eine Haftung zu verschiedenen Substraten zu ermöglichen. Diese Methode hat den Vorteil einer hervorragenden Wirtschaftlichkeit und einer einfachen Modifikation der Oberflächeneigenschaften durch Verwendung verschiedener polymerer Rohstoffe, wie z.B. Polyacrylate oder Polyurethane, so dass relativ einfach auf verschiedene Anforderungen reagiert werden kann. Die Verwendung von Dispersionen mit einer niedrigen Erweichungstemperatur (< 40 °C) führt häufig zu einer guten Haftung auf der Polyesteroberfläche und einer guten Haftvermittlung bei folgenden Prozessschritten (Beschichtung, Laminierung etc...), allerdings auf Kosten einer niedrigeren Beständigkeit bei Hochtemperaturanwendungen (> 90 °C), in denen der Haftvermittler aufweicht. Die Verwendung von höherschmelzenden Rohstoffen ist möglich, führt aber erfahrungsgemäß zu nur mäßiger Haftung auf der Polyesteroberfläche. Auch die Verwendung von Vernetzern z.B. auf Basis von Melamin-, Isocyanat- oder Oxazolinfunktionalisierten Rohstoffen ist aus Gründen der Toxizität (z.B. Abspaltung von Formaldehyd aus Melaminharzen) oder der einfachen Handhabung (Topfzeit der Beschichtung) nicht immer wünschenswert. Zudem muss die Beschichtung auf der Folie so flexibel sein, dass sie den Streckprozess in der Folienherstellung übersteht, ohne zu reißen o.Ä.

Bei Anwendungen in der Möbelindustrie ist biaxial gestreckte Polyesterfolie aufgrund ihrer hervorragenden Dimensionsstabilität auch bei höheren Temperaturen ein häufig verwendetes Material. Sie wird hierbei vom Möbelverarbeiter mit dekorativen, Melaminharz getränkten Papieren (Melaminpapier, Grammatur üblicherweise zwischen 50 und 200 g/qm) laminiert und optional auf der dem Melaminpapier gegenüberliegenden Seite mit einer Lackierung versehen, die ästhetischen Ansprüchen (Glanz, Mattigkeit) oder auch funktionalen Ansprüchen (Kratzfestigkeit, Beständigkeit) genügen sollen. Die Verpressung mit dem Melaminpapier erfolgt bei Temperaturen üblicherweise im Bereich von 120-190 °C und Drücken von 30-100 bar. Unter diesen Bedingungen muss sich ein dauerhafter Verbund bilden, der vom ersten Moment, d.h. beim Öffnen der Presse an, eine ausreichende Haftung hat und diese auch über einen langen Zeitraum von mehreren Jahren beibehält.

Die Verwendung diverser Beschichtungen auf Basis von Acrylaten, Polyurethanen oder Polyestern oder Polyimiden haben keinen positiven Effekt auf die Haftung auf Melaminpapier (egal ob inline oder offline aufgetragen). Die Erweichungspunkte der üblichen Beschichtungsmaterialien sind zu niedrig, so dass sie in der Presse aufschmelzen bzw. weich werden und entsprechend keine Haftung mehr vermitteln können.

Die Aufgabe der vorliegenden Erfindung ist es, eine Polyesterfolie zu entwickeln, die den oben genannten Anforderungen genügt, ohne dass ein offline-Behandlungsschritt der dem Melamin zugewandten Seite (Deckschicht A) notwendig ist. Die Nachteile (nur mäßige Haftung) einer inline Beschichtung auf der dem Melamin zugewandten Seite (Deckschicht A), wie sie aus dem Stand der Technik bekannt ist, sollen dabei ebenfalls überwunden werden.

### Begriffe und Definitionen

Zur Herstellung der erfindungsgemäßen Polyesterfolie werden bestimmte Polyestersorten verwendet, darunter auch Copolyester. Zur Beschreibung des Polyesteraufbaus wird auf die Wiederholungseinheiten zurückgegriffen. Demnach ist ein Polyester im Allgemeinen aus Wiederholungseinheiten aufgebaut, die aus Veresterung von Diolen mit Dicarbonsäuren entstehen, wobei die Wiederholungseinheiten im Molekül linear aneinander gekettet vorliegen und somit zur Gruppe der Thermoplasten gehören. Eine Wiederholungseinheit, die durch Veresterung eines Diols mit einer Dicarbonsäure entstanden ist, enthält entsprechend eine Diol-Komponente, die sich aus dem eingesetzten Diol ableitet, und eine Dicarbonsäure-Komponente, die sich aus der eingesetzten Dicarbonsäure ableitet. Stoffmengenanteile der Diol-Komponenten und Dicarbonsäure-Komponenten werden in Mol-% relativ zur Stoffmenge der Diol-Komponenten bzw. Dicarbonsäure-Komponenten im betrachteten Polyester/Copolyester angegeben. Somit beträgt die Summe der im Polyester/Copolyester vorkommenden Diol-Komponenten und Dicarbonsäure-Komponenten jeweils 100 Mol-%.

Weiterhin wird, sofern nicht anders angegeben, bei einem Copolyester von einem Grundgerüst aus Ethylen- und Terephthalateinheiten, also Polyethylenterephthalat (PET), ausgegangen. Dieses wird als reines Polyethylenterephthalat bezeichnet, da es zu 100 Mol-% aus Terephthalsäure als Dicarbonsäure-Komponente und zu 100 Mol-% aus Ethylenglykol als Diol-Komponente besteht, wobei etwaige Verunreinigungen mit Diethylenglykol als Diol-Komponente (das bedeutet in polymerisierter Form) und/oder Triethylenglykol als Diol-Komponente (das bedeutet in polymerisierter Form), die produktionsbedingt begleitend erscheinen, nicht eingerechnet sind. Verfahrensbedingt kann reines PET geringe Verunreinigungen an Diol-Komponenten aus Diethylenglykol und/oder Triethylenglykol enthalten, wobei diese Verunreinigungen zu maximal 1,5 Mol-% in dem reinen PET vorhanden sind. Für die Betrachtung der vorliegenden Erfindung werden diese Verunreinigungen vernachlässigt und es wird lediglich der Terephthalsäuregehalt und Diethylenglykolgehalt des reinen Polyethylenterephthalats betrachtet. Die Formulierung, dass das reine PET und der erfindungsgemäße Copolyester Terephthalsäure als Dicarbonsäure-Komponente enthalten ist so zu verstehen, dass Terephthalsäure zur Herstellung des Polyesters eingesetzt wird und die polymerisierte Form der Terephthalsäure als Dicarbonsäure-Komponente in dem Polyester vorliegt. In den erfindungsgemäßen Copolyestern wird von reinem Polyethylenterephthalat ausgegangen, wobei eine gewisse Menge des Ethylenglykols als Diol-Komponente oder der Terephthalsäure als Dicarbonsäure-Komponente durch andere Diol-Komponenten oder Dicarbonsäure-Komponenten ersetzt sind, die von Ethylenglykol oder Terephthalsäure verschieden sind. Für den Fall, dass eine Diol- bzw. Dicarbonsäure-Komponente aus unterschiedlichen Monomeren abgeleitet werden kann, spielt es keine Rolle welches konkrete Monomer bei der Polyesterherstellung Verwendung findet. So führen beispielsweise die Verwendung von Terephthalsäure (TPA) oder Dimethylterephthalat (DMT) zur selben Terephthalateinheit im Polyester.

Ein Copolyester im Sinne der Erfindung kann ein Copolyester, eine Mischung aus zwei oder mehr Copolyestern sein oder eine Mischung aus ein oder mehreren Homopolyestern und ein oder mehreren Copolyestern sein. Die einzige Beschränkung diesbezüglich liegt darin, dass die Copolyester/Copolyestermischungen, die in den einzelnen Schichten enthalten sind in Summe die Voraussetzungen gemäß in Anspruch 1 hinsichtlich der Zusammensetzung der Dicarbonsäuren und Diole erfüllen. So stellt beispielsweise eine Mischung aus reinem Polyethylenterephthalat und einem Diethylenglykol modifizierten Copolyester, der Polyethylenterephthalat und 33 Mol-% Diethylenglykol als weitere Diol-Komponente enthält, sowie eine Mischung aus reinem Polyethylenterephthalat und einem Copolyester, der Polyethylenterephthalat und 10 Mol-% 2-[(6Oxido-6H-dibenzo[c,e][1,2]oxaphosphinin-6-yl)methyl]bernsteinsäure als weitere Dicarbonsäure-Komponente enthält einen erfindungsgemäßen Copolyester dar, solange die resultierende Mischung in Summe die Voraussetzungen gemäß Anspruch 1 hinsichtlich der Zusammensetzung der Dicarbonsäuren und Diole erfüllt.

Unter Melaminpapier ist ein mit Melaminharz imprägniertes Papier zu verstehen.

### Kurze Erläuterung zur Abbildung

Schematischer Aufbau einer erfindungsgemäßen modifizierten Polyesterfolie. Modifizierte Deckschicht (A), Basis (B), Standard-Deckschicht (C), mit inline aufgebrachten Beschichtungen (X) (Silan-haltige Beschichtung (und (Y) (haftvermittelnde Beschichtung)

### Beschreibung

Die vorliegende Erfindung betrifft eine mehrschichtige, biaxial orientierte Polyesterfolie umfassend eine Deckschicht A und eine Basisschicht B,
wobei die Deckschicht A mit einer Silan-haltigen Beschichtung versehen ist, und
wobei die Deckschicht A zu mindestens 95 Gew.-% aus einem Copolyester besteht, der zu 100 Mol-% aus einer oder mehreren Dicarbonsäure-Komponenten und zu 100 Mol-% aus einer oder mehreren Diol-Komponenten besteht,
wobei der Copolyester abgeleitet ist aus reinem Polyethylenterephthalat, das zu 100 Mol-% aus Ethylenglykol als Diol-Komponente und zu 100 Mol-% aus Terephthalsäure als Dicarbonsäure-Komponente besteht,
   (a) in dem in Summe 12 bis 28 Mol-% des Ethylenglykols durch Diethylenglykol als Diolkomponente und 0 bis 5 Mol-% der Terephthalsäure durch Isophthalsäure als Dicarbonsäure-Komponente ersetzt sind, oder
   (b) in dem in Summe 3 bis 15 Mol-% der Terephthalsäure durch 2-[(60xido-6H-dibenzo[c,e][1,2]oxaphosphinin-6-yl)methyl]bernsteinsäure als Dicarbonsäure-Komponente ersetzt sind.

Die Deckschicht A besteht zu mindestens 95 Gew.-% aus einem Copolyester. Zusätzlich zu diesem Copolyester kann die Deckschicht A Zuschlagstoffe enthalten, die keine Polyester sind, wie z.B. anorganische Partikel oder mit Polyester inkompatible Polymere. Diese können unter anderem Partikel aus vernetztem PMMA, SiO₂, CaCO₃, PMSQ, TiO₂, BaSO₄, ZnS, CaSO₄ und Al₂O sein. Es ist bevorzugt, dass die Deckschicht A zu 95 bis 100 Gew.-%, bevorzugt zu 98 bis 100 Gew.-%, besonders bevorzugt zu 99,8 bis 100 Gew.-% aus dem Copolyester besteht.

Überraschenderweise wurde gefunden, dass eine Silan-haltige Beschichtung der Deckschicht A zu einer Verbesserung der Haftung der Polyesterfolie zu Melaminpapier führt. Es ist keine Blasenbildung zu beobachten, d.h. die Haftung ist auch im Augenblick der Öffnung der Presse bereits aktiv. Jedoch ist die Haftung noch nicht ausreichend, um die Anforderungen, die an die erfindungsgemäße Polyesterfolie gestellt werden zu erfüllen.

Es hat sich gezeigt, dass eine Kombination der Silan-haltigen Beschichtung der Deckschicht A mit einem mit Isophthalsäure-modifiziertem Polyester (IPA) in der Deckschicht A zu keiner weiteren Verbesserung der Haftung führt. Aus der Verwendung eines PET Copolyesters, in dem verglichen mit reinem PET 4,1 Mol-% (4,5 Mol-% IPA in einem Copolyester, der zu 92 Gew.-% in der Deckschicht A vorhanden ist) der Terephthalsäure durch Isophthalsäure als Dicarbonsäure-Komponente in der Deckschicht A ersetzt sind, ergibt sich keine Verbesserung der Haftung im Vergleich zu Standard-PET ohne IPA.

Wird in der Deckschicht A ein PET Copolyester verwendet, in dem gegenüber reinem PET 10,6 Mol-% (11,5 Mol-% IPA in einem Copolyester, der zu 92 Gew.-% in der Deckschicht A vorhanden ist) der Terephthalsäure durch Isophthalsäure als Dicarbonsäure-Komponente in der Deckschicht A ersetzt sind, lässt sich die Folie sogar mechanisch abschälen. Bei Verwendung eines PET-Copolyester, in dem gegenüber reinem PET 16,6 Mol-% (18 Mol-% IPA in einem Copolyester, der zu 92 Gew.-% in der Deckschicht A vorhanden ist) der Terephthalsäure durch Isophthalsäure als Dicarbonsäure-Komponente in der Deckschicht A ersetzt sind tritt zusätzlich eine vermehrte Blasenbildung auf, die ein deutliches Zeichen für mangelhafte Haftung ist.

Wird ein Copolyester verwendet, in dem gegenüber reinem PET ein Teil des Ethylenglykols durch Diethylenglykol als Diol-Komponente ersetzt ist oder ein Teil der Terephthalsäure durch 2-[(6Oido-6H-dibenzo[c,e][1,2]oxaphosphinin-6-yl)methyl]bernsteinsäure ersetzt ist, zeigt sich überraschenderweise ein anderes Bild.

Eine Kombination der Silan-haltigen Beschichtung der Deckschicht A zusammen mit einem Copolyester in der Deckschicht A, der zu 100 Mol-% aus einer Dicarbonsäure-Komponente und zu 100 Mol-% aus einer Diol-Komponente besteht und der aus reinem Polyethylenterephthalat (100 Mol-% Ethylenglykol als Diol-Komponente und 100 Mol-% aus Terephthalsäure als Dicarbonsäure-Komponente) abgeleitet ist, wobei in Summe 12 bis 28 Mol-% des Ethylenglykols durch Diethylenglykol als Diol-Komponente ersetzt sind, führt zu einer sehr festen und nicht mehr trennbaren Haftung zischen der Deckschicht A der erfindungsgemäßen Polyesterfolie und des Melaminpapiers. Sind weniger als 12 Mol-% des Ethylenglykols durch Diethylenglykol als Diol-Komponente ersetzt, ist die Haftung vergleichbar mit reinem Polyethylenterephthalat. Sind mehr als 28 Mol-% des Ethylenglykols durch Diethylenglykol als Diol-Komponente ersetzt, wird die Haftung wieder schlechter. Es ist entsprechend sowohl die Art der Modifikation entscheidend als auch der Anteil.

Eine sehr feste und nicht mehr trennbare Haftung zwischen der Deckschicht A der erfindungsgemäßen Polyesterfolie und des Melaminpapiers wird ebenfalls erreicht, wenn zusammen mit der Silan-haltigen Beschichtung der Deckschicht A ein Copolyester in der Deckschicht A verwendet wird, der zu 100 Mol-% aus einer Dicarbonsäure-Komponente und zu 100 Mol-% aus einer Diol-Komponente besteht und der aus reinem Polyethylenterephthalat (100 Mol-% Ethylenglykol als Diol-Komponente und 100 Mol-% aus Terephthalsäure als Dicarbonsäure-Komponente) abgeleitet ist, wobei in Summe 3 bis 15 Mol-% der Terephthalsäure durch 2-[(6Oxido-6H-dibenzo[c,e][1,2]oxaphosphinin-6-yl)methyl]bernsteinsäure als Dicarbonsäure-Komponente ersetzt sind. Werden weniger als 3 Mol-% oder mehr als 15 Mol-% der Terephthalsäure durch 2-[(6Oxido-6H-dibenzo[c,e][1,2]oxaphosphinin-6-yl)methyl]bernsteinsäure als Dicarbonsäure-Komponente ersetzt, ist die Haftung für die Zwecke er vorliegenden Erfindung nicht ausreichend.

Erfindungsgemäß ist es bevorzugt, dass in dem aus reinem Polyethylenterephthalat abgeleiteten erfindungsgemäßen Copolyester in Summe 13 bis 26 Mol-%, bevorzugt 14 bis 25 Mol-%, besonders bevorzugt 15 bis 24 Mol-% des Ethylenglykols durch Diethylenglykol als Diol-Komponente und 0 bis 2 Mol-%, bevorzugt 0 bis 1 Mol-% der Terephthalsäure durch Isophthalsäure als Dicarbonsäure-Komponente ersetzt sind, oder in dem aus reinem Polyethylenterephthalat abgeleiteten erfindungsgemäßen Copolyester in Summe 4 bis 12 Mol-%, bevorzugt 4 bis 10 Mol-%, besonders bevorzugt 5 bis 7 Mol-% der Terephthalsäure durch 2-[(6Oxido-6H-dibenzo[c,e][1,2]oxaphosphinin-6-yl)methyl]bernsteinsäure als Dicarbonsäure-Komponente ersetzt sind.

Besonders bevorzugt sind in dem aus reinem Polyethylenterephthalat abgeleiteten erfindungsgemäßen Copolyester der Deckschicht A in Summe 13 bis 26 Mol-%, bevorzugt 14 bis 25 Mol-%, besonders bevorzugt 15 bis 24 Mol-% des Ethylenglykols durch Diethylenglykol als Diol-Komponente und 0 Mol-% der Terephthalsäure durch Isophthalsäure als Dicarbonsäure-Komponente ersetzt. Das bedeutet, es ist besonders bevorzugt, dass der aus reinem Polyethylenterephthalat abgeleiteten Copolyester in der Deckschicht A frei von Isophthalsäure ist.

Ist der erfindungsgemäße Copolyester der Deckschicht A frei von Isophthalsäure, besteht der erfindungsgemäße Copolyester der Deckschicht A bevorzugt aus 13 bis 26 Mol-%, besonders bevorzugt 14 bis 25 Mol-%, ganz besonders bevorzugt 15 bis 24 Mol-% Diethylenglykol und aus 74 bis 87 Mol-%, bevorzugt 75 bis 86 Mol-%, besonders bevorzugt 76 bis 85 Mol-% Ethylenglykol als Diol-Komponenten und aus 100 Mol-% Terephthalsäure als Dicarbonsäurekomponente, oder
aus 100 Mol-% Ethylenglykol als Diol-Komponente und aus 4 bis 12 Mol-%, bevorzugt 4 bis 10 Mol-%, besonders bevorzugt 5 bis 7 Mol-% 2-[(6Oxido-6H-dibenzo[c,e][1,2]oxaphosphinin-6-yl)methyl]bernsteinsäure und aus 88 bis 96 Mol-%, bevorzugt 90 bis 96 Mol-%, besonders bevorzugt 93 bis 95 Mol-% Terephthalsäure als Dicarbonsäure-Komponenten.

Für eine ausreichende Haftung ist es essentiell, dass die Deckschicht A der erfindungsgemäßen Polyesterfolie mit einer Silan-haltigen Beschichtung versehen ist. Die Deckschicht A besitzt eine erste und eine zweite Oberfläche, wobei eine Oberfläche der Deckschicht A der Basisschicht B zugewandt ist und die zweite Oberfläche, die der Basisschicht B abgewandt ist, mit der Silan-haltigen Beschichtung versehen ist.

Erfindungsgemäß umfasst, die Silan-haltige Beschichtung der Deckschicht A ein oder mehrere Silane der folgenden allgemeinen Formel, 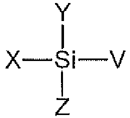 wobei
X, Y, Z unabhängig voneinander gleich oder verschieden sind und CH₃-CO₂- oder CH₃-(CH₂)ₙ-O- bedeuten, mit n = 0-5
   oder
X, Y unabhängig voneinander gleich oder verschieden sind und CH₃-CO₂- oder CH₃-(CH₂)ₙ-O- bedeuten, mit n = 0-5, und Z eine Alkylgruppe der Form CH₃-(CH₂)ₘ- ist mit m = 0-3
   und
V ein mindestens eine Vinylgruppe-, Aminogruppe-, Epoxygruppe- oder Methacrylgruppe tragender, Rest oder (CH₂)ₘ-NH-(CH₂)ₘ-SiXYZ mit m=2-5 ist.

Weiter ist es bevorzugt, dass die Silan-haltige Beschichtung ein oder mehrere Silane ausgewählt aus der Gruppe bestehend aus Vinyltriacetoxysilan, (Methacryloxymethyl)-methyldimethoxysilan, (3-Glycidyloxypropyl)-trimethoxysilan, Vinyltriethoxysilan, 2-Aminoethyl-3-aminopropyltrimethoxysilan und Bis(3-trimethoxysilylpropyl)amin, bevorzugt ausgewählt aus der Gruppe bestehend aus 2-Aminoethyl-3-aminopropyltrimethoxysilan und Bis(3-trimethoxysilylpropyl)amin enthält.

Bevorzugt weist die Silan-haltigen Beschichtung eine Dicke von 2 bis 25 nm, bevorzugt 5 bis 20 nm, besonders bevorzugt von 8 bis 15 nm auf.

Die Silan-haltige Beschichtung kann aus einem oder mehreren der oben genannten Silane bestehen oder zusätzlich in geringer Konzentration Additive enthalten, die prozesstechnisch günstig und üblich sind, wie bspw. Entschäumer, Benetzungsmittel, etc., und in der Regel keinen Einfluss auf die Funktion der Beschichtung haben.

Die erfindungsgemäße Polyesterfolie ist mindestens 2-schichtig aus einer Basisschicht B und einer Deckschicht A aufgebaut. Für die Anwendung in der Möbelindustrie ist es bevorzugt, dass die erfindungsgemäße Polyesterfolie zusätzlich eine Deckschicht C aufweist. In diesem Fall bildet die Basisschicht B eine Zwischenschicht und ist zwischen den Deckschichten A und C angeordnet. Sowohl die Basisschicht B als auch die Deckschicht C sind aus reinem Polyethylenterephthalat aufgebaut und können Zuschlagstoffe enthalten, die keine Polyester sind, wie z.B. anorganische Partikel oder mit Polyester inkompatible Polymere. Diese können unter anderem Partikel aus vernetztem PMMA, SiO₂, CaCO₃, PMSQ, TiO₂, BaSO₄, ZnS, CaSO₄ und Al₂O₃ sein.

Optional können einige oder alle Schichten der Folie darüber hinaus mit einem Antioxidans ausgestattet sein, wie z.B. Iragnox 1010 (BASF). Das Antioxidans verhindert einen zu starken Abbau der Polymere während der Verpressung und wirkt sich so Vorteilhaft auf die Verarbeitbarkeit der Folie beim Möbelhersteller aus.

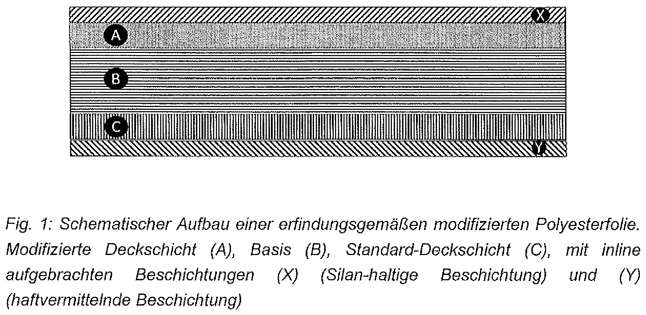

Bevorzugt ist die Deckschicht C mit einer haftvermittelnden Beschichtung versehen. Die Deckschicht C besitzt eine erste und eine zweite Oberfläche, wobei eine Oberfläche der Deckschicht C der Basisschicht B zugewandt ist und die zweite Oberfläche, die der Basisschicht B abgewandt ist, mit der haftvermittelnden Beschichtung versehen ist. Eine solche erfindungsgemäße Polyesterfolie ist in Fig. 1 abgebildet. Die haftvermittelnde Beschichtung dient dazu in den folgenden Prozessen des Möbelherstellers eine verbesserte Haftung möglicher Lacke zu ermöglichen, die z.B. auf Basis von Acrylaten oder Polyurethanen formuliert werden um bspw. die Kratzfestigkeit zu erhöhen. Die haftvermittelnde Beschichtung der Deckschicht C kann offline oder inline aufgetragen werden, wobei eine Inline-Beschichtung bevorzugt ist.

Für die haftvermittelnde Beschichtung kommen alle Stoffgruppen in Betracht, die die Haftung zwischen der Polyesterfolie und den Lacken verbessern. Für die haftvermittelnde Beschichtung können beispielsweise Beschichtungen auf Basis von Polyacrylaten, Polyurethanen, Polyestern und Polyimiden eingesetzt werden. Weiterhin ist ein Zusatz von Vernetzern möglich. Beispiele für geeignete Vernetzer sind Vernetzer auf Basis von Isocyanaten, Melamin, Carbodiimid oder Oxazolin, sowohl in niedermolekularer oder monomerer Form sowie eingebunden als funktionelle Gruppen in ein Polymer.

Die vorliegende Erfindung betrifft ebenfalls ein Verfahren zur Herstellung der erfindungsgemäßen Polyesterfolie wobei die Polyesterfolie mittels Extrusion hergestellt und biaxial gestreckt wird, eine Silan-haltige Beschichtungsmasse In-Line nass an die Polyesterfolie angetragen wird, und die beschichtete Polyesterfolie thermofixiert und aufgerollt wird, dadurch gekennzeichnet, dass
die Deckschicht A mit einer Silan-haltigen Beschichtung versehen ist, und
wobei die Deckschicht A zu mindestens 95 Gew.-% aus einem Copolyester besteht, der zu 100 Mol-% aus einer oder mehreren Dicarbonsäure-Komponenten und zu 100 Mol-% aus einer oder mehreren Diol-Komponenten besteht,
   wobei der Copolyester abgeleitet ist aus reinem Polyethylenterephthalat, das zu 100 Mol-% aus Ethylenglykol als Diol-Komponente und zu 100 Mol-% aus Terephthalsäure als Dicarbonsäure-Komponente besteht,
   (a) in dem in Summe 12 bis 28 Mol-% des Ethylenglykols durch Diethylenglykol als Diol-Komponente und 0 bis 5 Mol-% der Terephthalsäure durch Isophthalsäure als Dicarbonsäure-Komponente ersetzt sind, oder
   (b) in dem in Summe 3 bis 15 Mol-% der Terephthalsäure durch 2-[(6Oxido-6H-dibenzo[c,e][1,2]oxaphosphinin-6-yl)methyl]bernsteinsäure als Dicarbonsäure-Komponente ersetzt sind.

Zunächst wird der Polyester bzw. die Polyestermischung der Schichten in Extrudern komprimiert und verflüssigt. Dann werden die Schmelzen in einer Mehrschichtdüse zu flachen Schmelzfilmen ausgeformt, durch eine Breitschlitzdüse gepresst und auf einer Gießwalze abgezogen, wobei die Folie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kombirahmen. Das Streckverhältnis der Längsstreckung liegt üblicherweise bei 2,0 bis 5,0, insbesondere bei 2,5 bis 3,5, das der Querstreckung bei 2,5 bis 5,0, insbesondere bei 3,0 bis 4,0. Die Beschichtung mit der Silan-haltigen Beschichtung wird im Gravurverfahren aufgetragen. Es folgt die Thermofixierung der Folie bei Ofentemperaturen von 200 bis 260 °C, insbesondere von 220 bis 250 °C. Anschließend wird die Folie abgekühlt und aufgewickelt.

Weiterhin betrifft die vorliegende Erfindung ein Laminat umfassend die erfindungsgemäße Polyesterfolie und ein Melaminpapier. Das Melaminpapier besitzt eine erste und eine zweite Oberfläche. In dem erfindungsgemäßen Laminat ist die erste Oberfläche mit der Deckschicht A der Polyesterfolie verbunden die mit einer Silan-haltigen Beschichtung versehen ist.

Bevorzugt umfasst die Polyesterfolie in dem Laminat eine Deckschicht C, wobei die Basisschicht B zwischen den Deckschichten A und C angeordnet ist. Die Deckschicht C ist bevorzugt mit einer haftvermittelnden Beschichtung versehen, auf die ein Lack aufgetragen ist. Die Deckschicht C besitzt eine erste und eine zweite Oberfläche, wobei eine Oberfläche der Deckschicht C der Basisschicht B zugewandt ist und die zweite Oberfläche, die der Basisschicht B abgewandt ist, mit der haftvermittelnden Beschichtung versehen ist. Weiterhin ist es in diesem Laminat bevorzugt, dass das Melaminpapier mit einer zellulosehaltigen Platte verbunden ist, wobei die zellulosehaltige Platte mit der zweiten, der Deckschicht A abgewandten Oberfläche, mit der zellulosehaltigen Platte verbunden ist.

Die vorliegende Erfindung betrifft ebenfalls die Verwendung der erfindungsgemäßen Polyesterfolie in dem zuvor beschriebenen Laminat.

Weiterhin betrifft die vorliegende Erfindung die Verwendung des erfindungsgemäßen Laminats als Oberflächenmaterial für Möbelstücke.

### Beispiele

Es wurden folgende Rohstoffe verwendet:

| | |
|---|---|
| PET 1: | Klarrohstoff, Polyethylenterephthalat |
| PET 2: | Slip Masterbatch, PET1 mit 2 Gew.-% SiO2 Partikel |
| PET 3: | IPA modifizierter Copolyester (4,5 Mol-%), 21002, Fa. Sasa |
| PET 4: | IPA modifizierter Copolyester (11,5 Mol-%), Xpure 7001, Fa. Indorama Ventures |
| PET 5: | IPA modifizierter Copolyester (18,0 Mol-%), 21003, Fa. Sasa |
| PET 6: | IPA modifizierter Copolyester (22,3 Mol-%), 21024, Fa. Sasa |
| PET 7: | DEG modifizierter Copolyester (33 Mol-%), Bonds BU098, Fa. Selenis |
| PET 8: | 2-[(6Oxido-6H-dibenzo[c,e][1,2]oxaphosphinin-6-yl)methyl]bernsteinsäure modifizierter Copolyester (10 Mol-%), 21028, Fa. Sasa |

Die Rohstoffmischungen wurden in Extrudern komprimiert und verflüssigt. Dann wurden die Schmelzen in einer Mehrschichtdüse zu flachen Schmelzfilmen ausgeformt, durch eine Breitschlitzdüse gepresst und auf einer Gießwalze abgezogen. Anschließend wurden die Folien um den Faktor 3 in MD Richtung längsgereckt, danach in einem Kombirahmen in TD Richtung um den Faktor 3,4 breitgereckt: Im Anschluss wurden die Folien bei einer Temperatur von 240 °C thermofixiert und aufgewickelt.

Alle Muster wurden sowohl in einer unbeschichteten Variante, als auch in einer mit Beschichtung versehenen Variante bereitgestellt. Als Beschichtung wurde ein 2-Aminoethyl-3-amino-propyltrimethoxysilan (Dynasylan DAMO, Fa. Evonik) verwendet, und inline mittels reversed gravure Verfahren vor dem Kombirahmen aufgetragen. Der Nassantrag betrug 3 g/m² und der Wirkstoffgehalt betrug 2 Gew.-%, Die gemessene Schichtdicke an der Endfolie (trocken) betrug 6,5 nm.

Für die Herstellung der Laminate wurde eine Hydraulische Laborpresse P200T der Fa. Vogt Labormaschinen GmbH in Berlin verwendet. Die getesteten Muster wurden zusammen mit Melaminpapier (Fa. *DAKOR Melamin Imprägnierungen GmbH* in Heroldstadt) zwischen die Pressplatten gegeben und anschließend bei 170 °C und 60 bar Druck für 30 Sekunden laminiert.

Nach Öffnen der Pressplatten wurde die Haftung des modifizierten Polyesters durch Abschälen vom Melaminpapier geprüft. Das Ergebnis wurde jeweils als Gut (=lässt sich nicht abtrennen) oder nicht gut (= lässt sich vom Melaminpapier vollflächig abtrennen) bewertet. Eine Quantifizierung der Ablösekräfte ist nicht möglich.

Für die Gegenüberstellung der Beispiele wurde neben den Bewertungsstufen "gut" und "nicht gut" noch eine Zwischenstufe "partiell gut" eingefügt, um anzudeuten, dass die Haftung stellenweise jedoch nicht flächendeckend gut war. Dementsprechend ließ sich die Folie mit Aufwand abtrennen, was im Sinne dieser Erfindung gleichbedeutend mit "nicht gut" ist.

Skala Haftungstest: gut (+), partiell gut (0), nicht gut (-)

Tabelle 1 gibt die Zusammensetzungen verschiedener Polyesterfolien an. Diese Folien wurden ohne eine zusätzliche Beschichtung (unbeschichtetes Muster) und mit der erfindungsgemäßen Silan-haltigen Beschichtung (beschichtetes Muster) wie oben beschrieben zu einem Laminat verarbeitet.

**Tabelle 1: Rezepturen der verwendeten funktionellen Coex-Schichten.**

| | Vergleichsbeispiele | | | | | | | Beispiel | | |
|---|---|---|---|---|---|---|---|---|---|---|
| | | | | | | | | | | |

| | 1 | 2 | 3 | 4 | 5 | 6 | 9 | 7 | 8 | 10 |
|---|---|---|---|---|---|---|---|---|---|---|
| PET 1 [Gew.-%] | 92 | 0 | 0 | 0 | 0 | 62 | 0 | 42 | 22 | 27 |
| PET 2[Gew.-%] | 8 | 8 | 8 | 8 | 8 | 8 | 8 | 8 | 8 | 8 |
| PET 3[Gew.-%] | 0 | 92 | 0 | 0 | 0 | 0 | 0 | 0 | 0 | 0 |
| PET 4 [Gew.-%] | 0 | 0 | 92 | 0 | 0 | 0 | 0 | 0 | 0 | 0 |
| PET 5 [Gew.-%] | 0 | 0 | 0 | 92 | 0 | 0 | 0 | 0 | 0 | 0 |
| PET 6 [Gew.-%] | 0 | 0 | 0 | 0 | 92 | 0 | 0 | 0 | 0 | 0 |
| PET 7 [Gew.-%] | 0 | 0 | 0 | 0 | 0 | 30 | 92 | 50 | 70 | 0 |
| PET 8 [Gew.-%] | 0 | 0 | 0 | 0 | 0 | 0 | 0 | 0 | 0 | 65 |
| DEG [Mol-%] in Deckschicht A | 0 | 0 | 0 | 0 | 0 | 9,9 | 30,4 | 16,5 | 23,1 | 0 |
| Modifizierte Bernsteinsäure [Mol-%] in Deckschicht A | 0 | 0 | 0 | 0 | 0 | 0 | 0 | 0 | 0 | 6,5 |
| Haftungstest an unbeschichtetem Muster | - | - | - | - | - | - | | | | - |
| Haftungstest an beschichtetem Muster | 0 | 0 | - | - | - | 0 | | + | + | + |

Bei einer Zugabe von nur 30 Gew.-% (entspricht 9,9 Mol-% Diethylenglykol als weitere Diol-Komponente) des Bondz Rohstoff in die Deckschicht A ist die Haftung noch vergleichbar zu unmodifiziertem Polyester. Bei Zugabe von 50 Gew.-% und 70 Gew.-% (entspricht 16,5 Mol-% und 23,1 Mol-% Diethylenglykol als weitere Diol-Komponente) in die Deckschicht A ist die Haftung zum Melaminpapier jedoch sehr fest und nicht mehr trennbar. Bei einer Zugabe von 92 Gew.-% (entspricht 30,4 Mol-% Diethylenglykol als weitere Diol-Komponente) wird die Haftung jedoch wieder schlechter. Es ist entsprechend sowohl die Art der Modifikation entscheidend als auch der Anteil, es liegt kein linearer Zusammenhang vor.

Eine Zugabe von 65 Gew.-% (entspricht 6,5 Mol-% 2-[(6Oxido-6H-dibenzo[c,e][1,2]oxaphosphinin-6-yl)methyl]bernsteinsäure als Dicarbonsäure-Komponente) des PET 8 (Copolyester mit modifizierter Bernsteinsäure) in die Deckschicht A führt zu einer Haftung zum Melaminpapier, die sehr fest und nicht mehr trennbar ist.

## Patentansprüche

1. Mehrschichtige, biaxial orientierte Polyesterfolie umfassend eine Deckschicht A und eine Basisschicht B,
wobei die Deckschicht A mit einer Silan-haltigen Beschichtung versehen ist, und
wobei die Deckschicht A zu mindestens 95 Gew.-% aus einem Copolyester besteht, der zu 100 Mol-% aus einer oder mehreren Dicarbonsäure-Komponenten und zu 100 Mol-% aus einer oder mehreren Diol-Komponenten besteht,
wobei der Copolyester abgeleitet ist aus reinem Polyethylenterephthalat, das zu 100 Mol-% aus Ethylenglykol als Diol-Komponente und zu 100 Mol-% aus Terephthalsäure als Dicarbonsäure-Komponente besteht, in dem in Summe 12 bis 28 Mol-% des Ethylenglykols durch Diethylenglykol als Diol-Komponente und 0 bis 5 Mol-% der Terephthalsäure durch Isophthalsäure als Dicarbonsäure-Komponente ersetzt sind.

2. . Polyesterfolie nach Anspruch 1, **dadurch gekennzeichnet, dass** die Deckschicht A zu 95 bis 100 Gew.-%, bevorzugt zu 98 bis 100 Gew.-%, besonders bevorzugt zu 99,8 bis 100 Gew.-% aus dem Copolyester besteht.

3. . Polyesterfolie nach Anspruch 1 oder 2, **dadurch gekennzeichnet, dass** die Silan-haltige Beschichtung der Deckschicht A ein oder mehrere Silane der folgenden allgemeinen Formel umfasst, 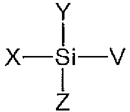 wobei
X, Y, Z unabhängig voneinander gleich oder verschieden sind und CH₃-CO₂- oder CH₃-(CH₂)ₙ-O- bedeuten, mit n = 0-5
oder
X, Y unabhängig voneinander gleich oder verschieden sind und CH₃-CO₂- oder CH₃-(CH₂)ₙ-O- bedeuten, mit n = 0-5, und Z eine Alkylgruppe der Form CH₃-(CH₂)ₘ- ist mit m = 0-3
und
V ein mindestens eine Vinylgruppe-, Aminogruppe-, Epoxygruppe- oder Methacrylgruppe tragender, Rest oder (CH₂)ₘ-NH-(CH₂)ₘ-SiXYZ mit m=2-5 ist.

4. . Polyesterfolie nach einem oder mehreren der Ansprüche 1 bis 3, wobei die Silan-haltige Beschichtung ein oder mehrere Silane ausgewählt aus der Gruppe bestehend aus Vinyltriacetoxysilan, Methacryloxymethyl)-methyldimethoxysilan, (3-Glycidyloxypropyl)-trimethoxysilan, Vinyltriethoxysilan, 2-Aminoethyl-3-aminopropyltrimethoxysilan und Bis(3-trimethoxysilylpropyl)amin, bevorzugt ausgewählt aus der Gruppe bestehend aus 2-Aminoethyl-3-aminopropyltrimethoxysilan und Bis(3-trimethoxysilylpropyl)amin enthält.

5. . Polyesterfolie nach einem der mehreren der Ansprüche 1 bis 4, **dadurch gekennzeichnet, dass** die Silan-haltigen Beschichtung eine Dicke von 2 bis 25 nm, bevorzugt 5 bis 20 nm, besonders bevorzugt von 8 bis 15 nm aufweist.

6. . Polyesterfolie nach einem oder mehreren der Ansprüche 1 bis 5, **dadurch gekennzeichnet, dass** in dem aus reinem Polyethylenterephthalat abgeleiteten Copolyester in Summe 13 bis 26 Mol-%, bevorzugt 14 bis 25 Mol-%, besonders bevorzugt 15 bis 24 Mol-% des Ethylenglykols durch Diethylenglykol als Diolkomponente ersetzt sind und 0 bis 2 Mol-%, bevorzugt 0 bis 1 Mol-% der Terephthalsäure durch Isophthalsäure als Dicarbonsäure-Komponente ersetzt sind.

7. . Polyesterfolie nach einem oder mehreren der Ansprüche 1 bis 6, **dadurch gekennzeichnet, dass** der aus reinem Polyethylenterephthalat abgeleiteten Copolyester in der Deckschicht A frei von Isophthalsäure ist.

8. . Polyesterfolie nach einem oder mehreren der Ansprüche 1 bis 7, **dadurch gekennzeichnet, dass** die Polyesterfolie eine Deckschicht C umfasst, wobei die Basisschicht B zwischen den Deckschichten A und C angeordnet ist.

9. . Polyesterfolie nach Anspruch 8, **dadurch gekennzeichnet, dass** die Deckschicht C mit einer haftvermittelnden Beschichtung versehen ist.

10. . Verfahren zur Herstellung einer Polyesterfolie nach einem oder mehreren der Ansprüche 1 bis 9, wobei die Polyesterfolie mittels Extrusion hergestellt und biaxial gestreckt wird, eine Silan-haltige Beschichtungsmasse In-Line nass an die Polyesterfolie angetragen wird, und die beschichtete Polyesterfolie thermofixiert und aufgerollt wird, **dadurch gekennzeichnet, dass**
die Deckschicht A mit einer Silan-haltigen Beschichtung versehen ist, und
wobei die Deckschicht A zu mindestens 95 Gew.-% aus einem Copolyester besteht, der zu 100 Mol-% aus einer oder mehreren Dicarbonsäure-Komponenten und zu 100 Mol-% aus einer oder mehreren Diol-Komponente besteht,
wobei der Copolyester abgeleitet ist aus reinem Polyethylenterephthalat, das zu 100 Mol-% aus Ethylenglykol als Diol-Komponente und zu 100 Mol-% aus Terephthalsäure als Dicarbonsäure-Komponente besteht, in dem in Summe 12 bis 28 Mol-% des Ethylenglykols durch Diethylenglykol als Diol-Komponente und 0 bis 5 Mol-% der Terephthalsäure durch Isophthalsäure als Dicarbonsäure-Komponente ersetzt sind ersetzt sind.

11. . Laminat umfassend eine Polyesterfolie nach einem oder mehreren der Ansprüche 1 bis 9 und ein Melaminpapier, **dadurch gekennzeichnet, dass** das Melaminpapier auf die Deckschicht A der Polyesterfolie aufgebracht ist, die mit einer Silan-haltigen Beschichtung versehen ist.

12. . Laminat nach Anspruch 11 **dadurch gekennzeichnet, dass** die Polyesterfolie eine Deckschicht C umfasst, wobei die Basisschicht B zwischen den Deckschichten A und C angeordnet ist, die Deckschicht C mit einer haftvermittelnden Beschichtung versehen ist, auf die ein Lack aufgetragen ist, und das Melaminpapier mit einer zellulosehaltigen Platte verbunden ist.

13. . Verwendung einer Polyesterfolie nach einem oder mehreren der Ansprüche 1 bis 10 in einem Laminat nach Anspruch 11 oder 12.

14. . Verwendung des Laminats nach Anspruch 11 oder 12 als Oberflächenmaterial für Möbelstücken.
